# EUROPEAN PATENT APPLICATION

(11) **EP 2 549 424 A1**
(43) Date of publication of application: **23.01.2013**
(21) Application number: 11756519.2
(22) Date of filing: 10.03.2011
(51) Int. Cl.: G06Q 30/00, G06Q 20/00

(54) **CARD BENEFIT PROVIDING METHOD AND CARD BENEFIT PROVIDING SERVER**

(30) Priority: 17.03.2010 KR 20100023865
(71) Applicant: BC Card Co., Ltd., Seoul 137-777 (KR)
(72) Inventor: LEE, Sangjoon, Seoul 100-130 (KR)
(74) Representative: Beck & Rössig European Patent Attorneys
(86) International application number: PCT/KR2011/001664
(87) International publication number: WO 2011/115388

(57) **Abstract**

Provided are a card benefit providing method and a card benefit providing server, which enable a card owner to use the card benefits of another party. If a card owner who wants to use the card benefits of another party requests the use of the card benefits of the other party, and the other party consents to the request, the card owner may then use the benefits of the other party's card in association with his/her card. The card benefit providing method includes the steps of receiving, by a card benefit providing server, a request for use of a benefit linked to a second card from a terminal of an owner of a first card, and performing, by the card benefit providing server, processing so that the benefit linked to the second card can be used in association with the first card when the owner of the second card has approvesd the benefit use request.

## Description

### BACKGROUND

### 1. Field

The disclosure relates to a card benefit providing method and a card benefit providing server, which enable a card owner to use the card benefits of another party. If a card owner who wants to use the card benefits of another party requests the use of the card benefits of the other party and the other party consents to the request, the card owner may then use the benefits of the other party's card in association with his/her card.

### Description of the Related Art

In the related art, customers generally use cash as a payment means when purchasing goods and the like. However, the customers usually pay money using portable credit cards or check cards or the like, without the burden of carrying cash. In particular, frequent use of credit cards or the like by businessmen who want to receive an income tax deduction is rapidly increasing.

Credit card companies are fiercely competing for subscription of customers. As one of marketing methods for the subscription of customers, credit card companies are enhancing the provision of benefits associated with credit cards. However, there is a problem in that it is difficult for customers to know the various card benefits, and card benefits of the cards generally used are limited.

Accordingly, credit card companies need to provide card benefits necessary for customers so as to strengthen competitiveness. Also, it is urgent to cope with card benefits that are not well used by customers.

### SUMMARY

Exemplary embodiments provide a card benefit providing method and a card benefit providing server, which enable a card owner to substantially use card benefits by enabling the benefits of another party's card to be used in association with the card owner's card in terms of mutually desired card benefits between card owners.

According to an exemplary embodiment, there is provided a card benefit providing method including the steps of: receiving, by a card benefit providing server, a request for use of card benefits linked to a second card, from a terminal of a first card owner; and performing, by the card benefit providing server, processing so that the benefits linked to the second card may be used in association with the first card, when the owner of the second card has given consent to the benefit use request.

According to another exemplary embodiment, there is provided a card benefit providing server including: a database (DB) configured to store card information of first and second cards; a receiver configured to receive a request for use of benefits linked to the second card, from a terminal of an owner of the first card; a transmitter configured to transmit information to the terminal of the owner of the first card and a terminal of the owner of the second card; and a controller configured to perform processing so that the benefits linked to the second card can be used in association with the first card when the owner of the second card has approved the benefit use request, and control the DB, the receiver, and the transmitter.

In accordance with the exemplary embodiments of the present invention, a card owner can use the benefits of another party's card in association with the owner's card when the other party consents to the use of the benefits. Accordingly, it is possible to make up a shortage of a specific benefit frequently used by a card owner through the assignment of benefits of another party's card and use the benefits of the other party's card. In addition, a card owner can provide another card owner with remaining specific benefits that are not well used. That is, technologies of the exemplary embodiments of the present invention can be significantly advantageous for card owners who mainly use only specific card benefits.

In addition, active use of card benefits can be expected through the card benefit exchange between card owners.

### BRIEF DESCRIPTION OF THE DRAWINGS

Exemplary embodiments are described in further detail below with reference to the accompanying drawings. It should be understood that various aspects of the drawings may have been exaggerated for clarity:
FIG. 1 is a conceptual diagram illustrating a card benefit providing method in accordance with an exemplary embodiment of the present invention;
FIG. 2 is a block configuration diagram of a card benefit providing server in accordance with an exemplary embodiment of the present invention;
FIG. 3 is a flowchart illustrating a link (connection) contract conclusion process in accordance with an exemplary embodiment of the present invention;
FIG. 4 is a flowchart illustrating the card benefit providing method in accordance with an exemplary embodiment of the present invention; and
FIG. 5 is a diagram illustrating an example of a specific step of FIG. 4.

### DETAILED DESCRIPTION

Hereinafter, a card benefit providing method and a card benefit providing server in accordance with exemplary embodiments of the present invention will be described in detail with reference to the annexed drawings. The terms used in this specification will first be briefly described, and the present invention will be specifically described.

The terms used hereinafter have been selected from general terms widely used in the art in consideration of the functions of the present invention and may differ according to the intentions or conventions of those skilled in the art, the advent of novel technologies, and the like. In addition, specific terms have been arbitrarily selected by the applicant and their meanings are explained in detail in the following description as needed. Accordingly, the definitions thereof should be defined based on the general content of this specification.

A card used throughout this specification refers to a payment means when goods or service is purchased. An example of the card may be a credit card, a check card, a prepaid card, a smart card, or the like, and may also include a mobile card as well as a plastic card of the related art. The mobile card is not a general type of card (for example, a plastic card), and refers to a card implemented in a mobile terminal in the form of software. The mobile card is issued over a wireless network.

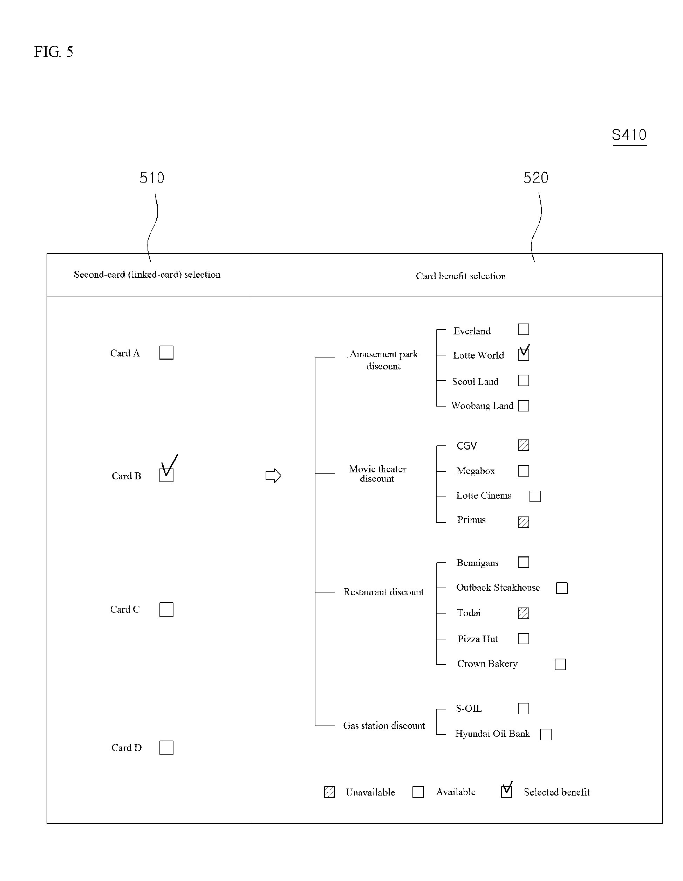

In this specification, benefits (card benefits) linked to a card are various benefits such as movie discounts, eating out discounts, shopping discounts, amusement park discounts, travel discounts, and mileage accrual obtained by receiving and using an issued card. Detailed description thereof will be given later with reference to FIG. 5.

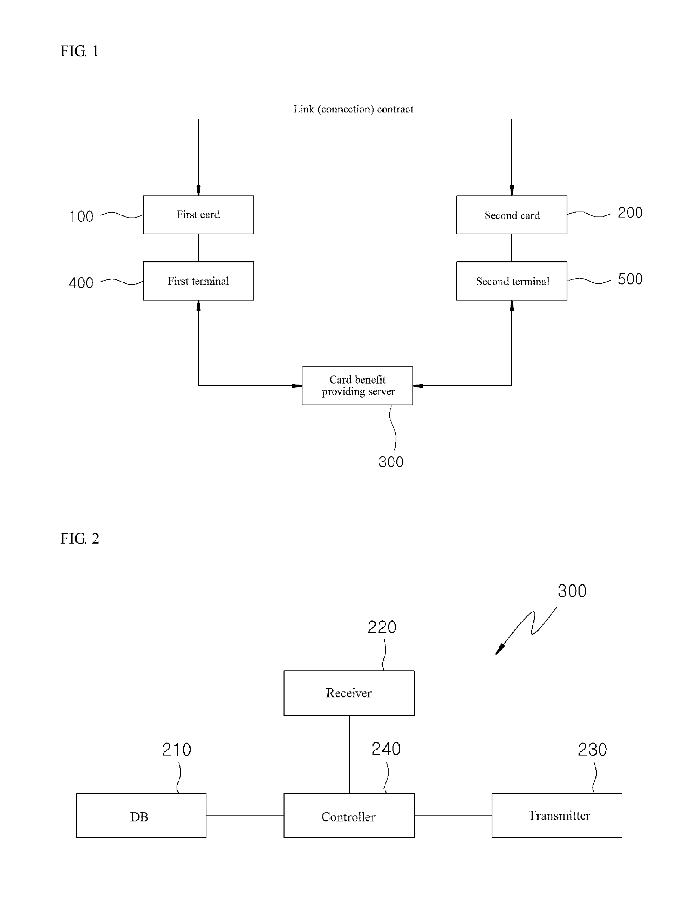

FIG. 1 is a conceptual diagram illustrating a card benefit providing method in accordance with an exemplary embodiment of the present invention.

As illustrated in FIG. 1, a link (connection) contract can be concluded between a first card 100 and a second card 200 in accordance with an exemplary embodiment of the present invention.

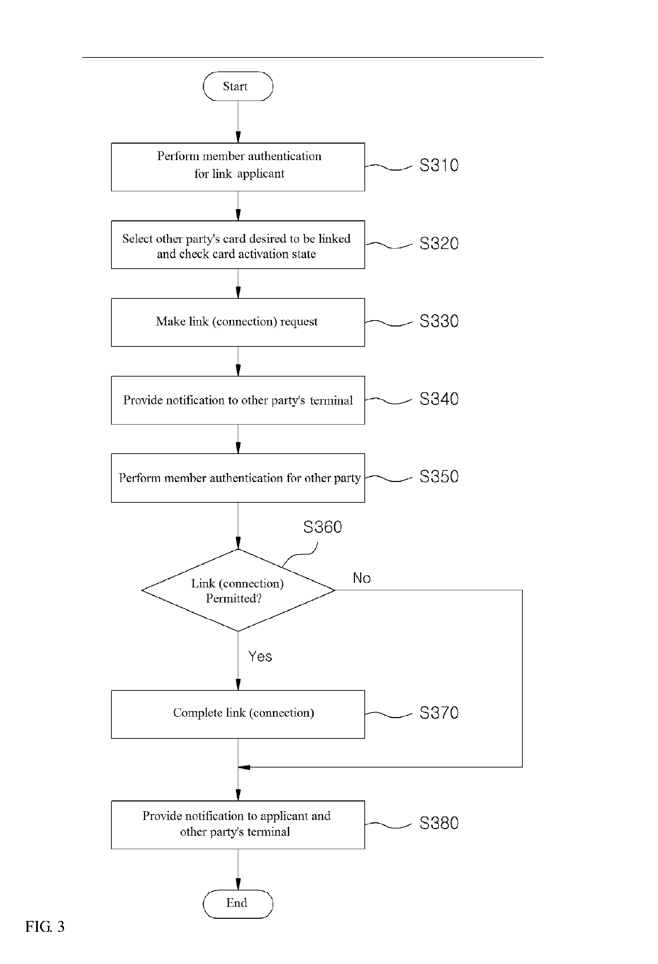

The link (connection) contract is a contract of content in which benefits one party's card can be used in association with another party's card when there is consent or agreement between card owners. The link contract can be concluded among a plurality of cards having different card numbers. The link contract can be concluded among a plurality of parties and between cards of the same party. A process of concluding the link (connection) contract will be described later in detail with reference to FIG. 3.

As a card linked to the second card 200 in the conclusion of the link (connection) contract, the first card 100 is owned by an applicant who requests use of a benefit of the second card 200.

As a card linked to the first card 100 in the conclusion of the link (connection) contract, the second card 200 is owned by another party who can determine whether or not to approve the card benefit use request of the owner of the first card 100. Because a link (connection) contract with a plurality of cards can be concluded for the first card 100, a plurality of second cards 200 may be provided. In this case, the same person may own the plurality of second cards 200.

A first terminal 400 is a terminal of the owner of the first card 100. A second terminal 500 is a terminal of the owner of the second card 200. The terminal can include a mobile terminal as well as a fixed terminal. The fixed terminal may be a desktop computer.

The mobile terminal can be implemented in various forms. An example of the mobile terminal described in this specification is a mobile phone, a smart phone, a notebook computer, a digital broadcast terminal, a personal digital assistant (PDA), a portable multimedia player (PMP), a navigation machine, an e-book terminal, a template personal computer (PC), or the like.

In the exemplary embodiment of the present invention, both the first terminal 400 and the second terminal 500 may be fixed terminals or mobile terminals. Alternatively, only one of the first terminal 400 and the second terminal 500 may be a mobile terminal. However, because information is usually received or transmitted using mobile terminals in view of current transaction society, the first and second terminals will be defined and described as mobile terminals hereinafter.

The card benefit providing server 300 is connected to the first terminal 400 and the second terminal 500, and can perform a function of providing the owner of the first card 100 with a benefit linked to the second card 200. The card benefit providing server 300 receives a card benefit use request of the owner of the first card 100 from the first terminal 400, and transmits content of the request to the second terminal 500. When there is an agreement by the owner of the second card 200, the card benefit providing server 300 can perform processing so that the owner of the first card 100 can use the benefits linked to the second card 200.

FIG. 2 is a block configuration diagram of the card benefit providing server in accordance with an exemplary embodiment of the present invention.

In accordance with the exemplary embodiment of the present invention illustrated in FIG. 2, the card benefit providing server 300 can include a DB 210, a receiver 220, a transmitter 230, and a controller 240.

The DB 210 can store card information of the first card 100 and the second card 200, and store content of card benefits linked to both cards. The card information can include card number, personal information (name, address, telephone number, social security number, and the like) of a card user, card subscription date, the number of linked cards, a linked card number, card use history, additional service use history, information indicating whether or not specific requirements required by a card company are satisfied, and the like.

The above-described receiver 220 can receive a request of use of a benefit linked to the second card 200 from the owner of the first card 100 from the first terminal 400. In addition, the receiver 220 can receive a response regarding consent by the owner of the second card 200 for the benefit use request, from the second terminal 500. On the other hand, when a link contract is concluded, the receiver 220 can receive a link contract conclusion request of a card owner, and also receive content indicating whether or not there is an agreement by the owner of the other card for the link contract conclusion request.

The transmitter 230 can transmit various information or signals to the exterior. For example, the transmitter 230 can transmit content for determining whether or not there is an agreement by the owner of the second card 200 for the above-described benefit use request to the second terminal 500. In addition, when there is a link contract conclusion request in the link contract conclusion process, content of the request can be transmitted to the other party. If the link contract is completed and the other party rejects the link contract conclusion, processing results can be transmitted to at least one of the applicant's terminal and the other party's terminal. In this case, the transmitter 230 can transmit various information or signals to the mobile terminal or the like through a text message, E-mail, and specific software.

When the owner of the second card 200 approves the benefit use request, the controller 240 performs processing so that the benefits linked to the second card 200 can be used in association with the first card 100. When the control 240 performs processing so that the benefits linked to the second card 200 can be used in association with the first card 100, the benefits can be eliminated from the second card 200. In addition, the controller 240 can generally control the DB 210, the receiver 220, and the transmitter 230.

FIG. 3 is a flowchart illustrating a link (connection) contract conclusion process in accordance with an exemplary embodiment of the present invention.

A card owner (applicant) desiring to conclude a link (connection) contract can be subjected to member authentication so as to make a link contract conclusion request (S310). In this case, the applicant can be subjected to member authentication using wired communication or wireless communication.

As a member authentication method using wired communication technology, the applicant can be authenticated as a member by accessing a web site of the above-described card company and using a public key certificate, or inputting an identifier (ID)/password.

As a member authentication method using wireless communication technology, the applicant can be authenticated as a member by accessing the mobile web of the card company or through a wireless application protocol (WAP). WAP is a communication protocol designed to enable a mobile communication device, PDA, or a mobile terminal such as a wireless terminal, to be connected to the Internet. In this case, the applicant can also be authenticated as a member by employing a public key certificate, or inputting an ID/password.

When the applicant is authenticated as a member, the applicant can select another party's card desired to be linked, and the card benefit providing server 300 can check the activation state of the other party's card (S320). The applicant can select a plurality of cards of the other party desired to be linked. In this case, the applicant can also make a link contract conclusion request for a plurality of cards owned by the same other party.

Accordingly, it is possible to share benefits within a group through group subscription with many people such as family, friends, workmates, and the like. In this case, the above-described card company can promote group subscription through marketing.

On the other hand, card activation state means that a card is normally used. When a card owner cancels card issuance or cancels a contract (for card use), or while the card owner is absent, the card is deactivated. The other party's card for which an applicant can request a link (connection) contract can be limited to an activated card. Accordingly, the step of checking, by the above-described card benefit providing server 300, the activation state of the other party's card can be necessary.

When an applicant has selected the activated card of the other party, the above-described card benefit providing server 300 can receive a link (connection) contract conclusion request (S330). In this case, the above-described card benefit providing server 300 can provide notification of content indicating the link (connection) contract conclusion request to the terminal of the other party (S340). In this case, the above-described card benefit providing server 300 can provide notification of content to the terminal of the other party using wired/wireless communication technology. When the content is transmitted to the mobile terminal using wireless communication, the above-described card benefit providing server 300 can provide notification using a text message, E-mail, or a dedicated application. The text message can include a short message service (SMS) message, a long messaging service (LMS) message, and a multimedia messaging service (MMS) message. SMS message is a short message of less than 40 characters, LMS message is a long message of up to 1,000 characters, and MMS message, which is also referred to as color mail, is used to transmit photos, music, moving-image files, and the like.

As described above, the other party receiving the notification can be authenticated as a member by accessing the web site of the above-described card company, accessing the mobile web of the above-described card company, or using WAP (S350).

The above-described other party can permit a link (connection) contract when desiring to conclude the link (connection) contract with a card owned by the applicant (S360). In this case, the card of the applicant and the card of the other party are linked (connected) (S370). The above-described card benefit providing server 300 can notify the applicant or the other party's terminal of the fact that the link (connection) has been completed (S380).

On the other hand, when the other party rejects the link (connection) contract conclusion request of the applicant (S360), the above-described card benefit providing server 300 can notify the applicant or both the applicant and the other party that the link (contract) contract between the cards has not been concluded (S380).

When the above-described card benefit providing server 300 provides notification indicating that the link (connection) has been completed, or notification indicating that the link (connection) contract has not been concluded, the notifications can be provided using a text message (SMS, LMS, or MMS), E-mail, or a dedicated application.

On the other hand, the link (connection) contract can be concluded through an agreement for the conclusion of the link (connection) contract while card owners perform card subscription together in addition to a method in which one of the card owners obtains permission while requesting the owner of another card to permit the link (connection). In this case, the link (connection) contract can be concluded off-line.

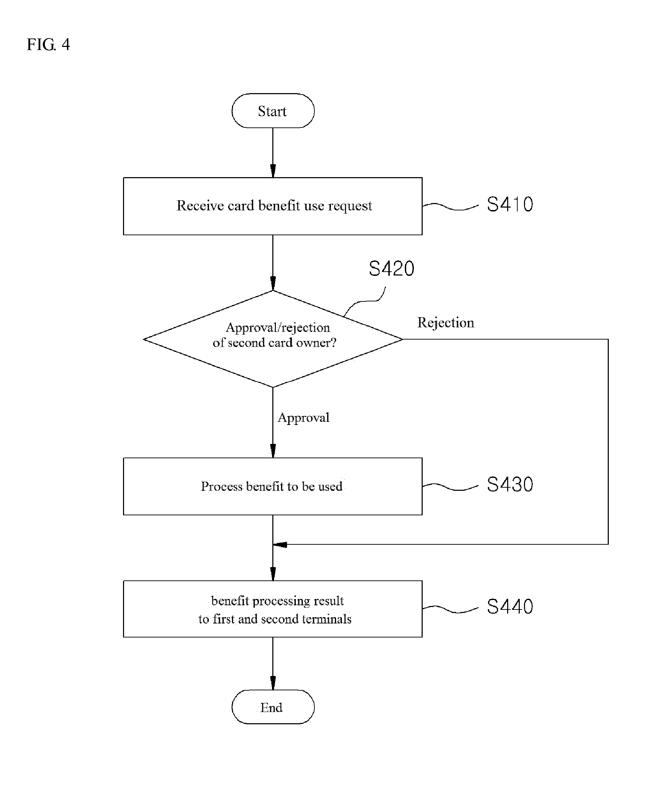

When the above-described link (connection) is completed, the card of the applicant and the card of the other party become the first card 100 and the second card 200 linked (connected) to each other. Thereafter, when it is necessary for the owner of the first card 100 to use a specific benefit, the owner of the first card 100 can send a card benefit use request to the other party using wired/wireless communication. The owner of the first card 100 may be the applicant requesting the link (connection) contract conclusion or the other party consenting to the link (connection) contract conclusion. Methods of requesting use of a specific benefit and providing the specific benefit will be described later with reference to FIGS. 4 and 5.

FIG. 4 is a flowchart illustrating the card benefit providing method in accordance with an exemplary embodiment of the present invention.

The card benefit providing server 300 can receive a card benefit use request of the owner of the first card 100 from the first terminal 400 (S410).

The card benefit providing server 300 can receive the card benefit use request using wired or wireless communication.

When wireless communication is used, the owner of the first card can make the request by accessing the mobile web of the card company or through WAP. In this case, WAP can use a wireless markup language (WML), a mobile hypertext markup language (mHTML), and the like. As a wireless protocol markup language operating in WAP, WML is a language suitable for a wireless mobile terminal such as a PDA having a small screen, a limited memory and central processing unit (CPU), and a narrow bandwidth. As a language generated for creating a wireless terminal document based on HTML, mHTML is a reduced language created by Microsoft Corporation to be suitable for an HTML environment, makes access to an existing web site possible, and supports WAP.

The step of receiving, by the card benefit providing server 300, the card benefit use request of the owner of the first card 100 from the first terminal 400 can include the steps of selecting, by the owner of the first card 100, the second card 200, and selecting, by the owner of the first card 100, the type of card benefit to be used. Detailed content of these steps will be described later with reference to FIG. 5.

The card benefit providing server 300 can transmit content for determining whether or not the owner of the second card 200 approves the request of the owner of the first card 100 to the second terminal 500. Although the first card 100 and the second card 200 are in a linked (connected) state, the owner of the first card 100 does not receive all the benefits without the consent of the owner of the second card 200. This is because the benefits requested by the owner of the first card 100 may be necessary for the owner of the second card 200. Accordingly, when the card benefit use request is received from the owner of the first card 100, the card benefit providing server 300 transmits its results to the second terminal 500.

The card benefit providing server 300 can transmit the above-described results using wired/wireless communication, and transmit the results using a text message (SMS, LMS, or MMS), E-mail, a dedicated application, or the like when wireless communication is used.

Upon receipt of the request results of the owner of the first card 100 from the card benefit providing server 300, the owner of the second card 200 can select to approve or reject the request (S420). When the requested benefit is regarded as unnecessary for the owner of the second card 200, the owner of the second card 200 permits the owner of the first card 100 to use the requested benefit. If the requested benefit is scheduled to be used by the owner of the second card 200 or the use of the requested benefit has been permitted for another card owner, the owner of the second card 200 can reject the request of the owner of the first card 100.

The card benefit providing server 300 can receive a response of the approval or rejection of the owner of the second card 200. In this case, the card benefit providing server 300 can use a wired/wireless communication network. When a wireless communication network is used, the card benefit providing server 300 can receive a response from the second terminal 500 over a third generation (3G) network, a fourth generation (4G) network, or a wireless fidelity (WiFi) network. As 3G mobile communication, a representative example of 3G is a wideband code division multiple access (WCDMA), or high speed downlink packet access (HSDPA) scheme and its frequency use is internationally uniform as 2GHz at which an automatic international roaming service is possible. As 4G mobile communication, 4G is similar to 3G, but is technology for implementing a download speed that is 10 times faster than in 3G. A WiFi network is a local area network (LAN) in which an ultrahigh speed Internet service is possible within a fixed distance from a place in which a wireless access point (AP) is installed. In accordance with an exemplary embodiment of the present invention, when the card benefit providing server 300 receives the approval or rejection response over the 3G or 4G network, a user fee can be charged to the owner of the second card 200. On the other hand, when the approval or rejection response over the 3G or 4G network is received using the WiFi network, the owner of the second card 200 does not have the burden of a separate fee.

When the owner of the second card 200 consents to the request, the card benefit providing server 300 can perform processing so that the benefits linked to the second card 200 can be used in association with the first card 100 (S430).

For example, it is assumed that the owner of the first card 100 frequently goes to the movies with his wife, and the owner of the second card 200 dislikes watching movies in the theater and usually watches movies at home using a digital versatile disc (DVD) player. When the owner of the first card 100 desires to watch a movie in a movie theater using the first card 100, only 2,000 won is discounted. Accordingly, the owner of the first card 100 desires to use a movie discount benefit of the second card 200 previously linked to the first card 100. The owner of the first card 100 makes a request for use of the movie discount benefit of the second card 200 by accessing the web site or mobile web of the above-described card company. The card benefit providing server 300 notifies the owner of the second card 200 of the request content through a text message or the like. Because the owner of the second card 200 receiving the text message or the like dislikes going to the movie theater and rarely uses the movie discount benefit, the owner of the second card 200 permits the owner of the first card 100 to use the benefit. The card benefit providing server 300 upon receiving consent of the owner of the second card 200, performs processing so that the owner of the first card 100 can use the movie discount benefit, a 2,000 won discount, of the second card 200. Accordingly, the owner of the first card 100 can watch a movie with a total discount of 4,000 won including the 2,000 won discount using the movie discount benefit of the first card 100 and the 2,000 won discount using the movie discount benefit of the second card 200.

In addition, because a plurality of cards can be linked to the first card 100, the owner of the first card 100 can simultaneously use all of a benefit of the first card 100 and benefits of a plurality of second cards 200, for example, cards A, B, and C, when making card benefit use requests for the linked cards A, B, and C. If these benefits are movie discount benefits, the owner of the first card 100 can use a total discount of 8,000 won, including 2,000 won discounts for the four cards.

When the owner of the first card 100 uses the benefit of a linked card as described above, a benefit for a shortage due to frequent use of the benefit can be advantageously handed over from other card owners to the owner of the first card 100. In addition, card benefits are usually provided monthly and eliminated if the card benefits are not used. However, because benefits that are not well used can be handed over to other card owners, a card owner can reduce loss due to unused benefits.

When the card benefit providing server 300 performs processing so that a benefit linked to the second card 200 can be used in association with the first card 100, the card benefit providing server 300 can cause the above-described benefit to be eliminated from the second card 200. Because the owner of the second card 200 has permitted the owner of the first card 100 to use the benefit, it is reasonable to prevent the owner of the second card 200 from using the above-described benefit from a point of view of the card company.

However, the above-described benefit is not constantly eliminated from the second card 200. According to the type of benefit, the benefit may remain with the second card 200 even when processing is performed so that the owner of the first card 100 uses the benefit.

When the owner of the second card 200 approves or rejects a request of the owner of the first card 100, the card benefit providing server 300 can transmit its processing result to at least one of the first terminal 400 and the second terminal 500 (S440). When the processing result is transmitted, the card benefit providing server 300 can provide notification of its content using wired/wireless communication technology. When the content is transmitted to the mobile terminal using wireless communication, the card benefit providing server 300 can provide the notification using a text message, E-mail or a dedicated application.

In this case, the owner of the first card 100 and the owner of the second card 200 can conveniently know the processing result. In addition, when the owner of the first card 100 has wrongly selected the type of second card 200 or the type of card benefit, or when the owner of the second card 200 has wrongly selected approval/rejection, the card benefit providing server 300 can perform processing to cancel the use of a benefit of the second card 200 by the owner of the first card 100.

On the other hand, in accordance with an exemplary embodiment of the present invention, a card benefit use method can include an operation in which the card benefit providing server 300 performs processing so that benefits can be used in association with the first card 100 only when a specific condition required by the card benefit providing server 300 is satisfied.

In accordance with an exemplary embodiment of the present invention, it is characterized that the card benefit providing server 300 performs processing so that benefits can be used in association with the first card 100 only when a specific condition required by the card benefit providing server 300 is satisfied. In this case, the specific condition can be added to only one of the first card 100 and the second card 200, or both the first card 100 and the second card 200.

For example, a specific condition that the owner of the first card 100 can use the benefit of the second card 200 only when the amount of money paid using each of the first card 100 and the second card 200 linked to each other is at least 300,000 won per month, can be added.

In addition, in this case, the same condition can be added to all benefits, but a specific condition can be added to each benefit. For example, the benefit use request for the owner of the second card 200 is possible only for a card owner paying a card user fee of at least 300,000 won per month in the case of a benefit of an amusement park discount, but the owner of the first card 100 can make a benefit use request regardless of card usage amount in the case of a benefit of a restaurant discount.

As described above, when the card benefit providing server 300 adds a specific condition in favor of the card company, the owners of the first card 100 and the second card 200 should increase card use frequency so as to make a request for benefits, and the owners should use the first card 100 and the second card 200 as their main cards. Accordingly, the card company can increase an earning rate.

In an exemplary embodiment of the present invention, a valid period can be designated for benefits linked to the second card 200. Accordingly, benefits can be eliminated after the valid period. After the benefits are eliminated, the owner of the first card 100 does not make a request to use the benefit.

As another exemplary embodiment, the card benefit providing server 300 can allow the owner of the first card 100 to designate a valid period of the selected benefit when the owner of the first card 100 makes a benefit use request. After the valid period designated by the owner of the first card 100, the card benefit providing server 300 can prevent the owner of the first card 100 from using the benefit. In this case, because the benefit is not used due to a reason attributable to the owner of the first card 100, the card benefit providing server 300 enables the owner of the second card 200 to use the benefit by returning the benefit to the second card 200. Alternatively, both the owners of the first card 100 and the second card 200 may not use the benefit in a state in which the benefit has been eliminated from the second card 200.

In accordance with an exemplary embodiment of the present invention, when the card benefit providing server 300 receives the card benefit use request from the first terminal 400, the card benefit providing server 300 verifies whether or not the first card 100 and the second card 200 have been connected (linked) under contract. In this case, the card benefit providing server 300 can determine whether or not the cards are linked (connected) using card information of the first card 100 and the second card 200 stored in the DB 210.

As still another exemplary embodiment, the card benefit providing server 300 can receive information indicating whether or not the link contract between the first card 100 and the second card 200 has been concluded from the second terminal 500 when the card benefit providing server 300 obtains the approval of the owner of the second card 200 to the card benefit use request of the owner of the first card 100 from the second terminal 500.

Because the link (connection) contract between the first card 100 and the second card 200 should be concluded so that the owner of the first card 100 can make the card benefit use request, the step of determining whether or not the first card 100 and the second card 200 are linked (connected) cards can be important.

FIG. 5 is a diagram illustrating an example of a specific step of FIG. 4.

As illustrated in FIG. 5, the step of receiving, by the card benefit providing server 300, a card benefit use request of the owner of the first card 100 from the first terminal 400 can include the step of specifying, by the owner of the first card 100, the second card 200 and the step of selecting, by the owner of the first card 100, the type of card benefit to be used.

First, the owner of the first card 100 can select one of the second cards 200 so as to specify the second card 200. As described above, a plurality of cards can be linked (connected) to the first card 100. Accordingly, the owner of the first card 100 can select one of the plurality of second cards 200 including benefits to be used. In this case, the card benefit providing server 300 can display a plurality of linked second cards 200 capable of being specified by the owner of the first card 100, and provide a second-card selection window 510 in which one of the second cards 200 can be selected.

After the owner of the first card 100 has selected the second card 200, the owner of the first card 100 can select one specific benefit desired to be used among benefits included in the second card 200. In this case, the card benefit providing server 300 can display all benefits linked to the second card 200 to the owner of the first card 100, and provide a card benefit selection window 520 in which available benefits and unavailable benefits are distinguished. As described above, when the card benefit providing server 300 provides the window 520 in which one of various benefits can be selected, it is possible to improve convenience for the owner of the first card 100 because the owner of the first card 100 can view the benefits linked to the second card 200 at a glance.

On the other hand, the owner of the first card 100 can make a card benefit use request by briefly describing the type of second card 200 and benefit desired to be used.

In accordance with an exemplary embodiment of the present invention, an unavailable benefit may be a benefit that is not usable because a specific condition added to the card is not satisfied. In addition, the unavailable benefit may be a benefit unavailable to the owner of the first card 100 because the owner of the second card 200 has already used the benefit. The owner of the first card 100 does not select the unavailable benefit.

An exemplary embodiment of the present invention will be described in detail with reference to FIG. 5. It is assumed that the owner of the first card 100 desires to use a discount benefit of a free ticket of the second card 200 because a 50% discount benefit of a free ticket for only the owner of the first card 100 is applied when the owner of the first card 100 goes to an amusement park, such as Lotte World, along with a friend. When the owner of the first card 100 sends the benefit use request to the card benefit providing server 300, the card benefit providing server 300 first provides the second-card selection window 510 in which one of the plurality of second cards 200 with which the link contract has been concluded can be selected. The owner of the first card 100 selects one of the second cards 200 including the discount benefit of the free ticket for Lotte World. For example, assuming that the owner of the first card 100 has selected card B among the second cards 200, the card benefit providing server 300 provides the card benefit selection window 520 in which various benefits linked to card B are displayed, and one of the benefits of card B can be selected. The benefits may be discount benefits at an amusement park, a restaurant, a gas station, and the like. Available benefits and unavailable benefits can be displayed together in the card benefit selection window 520. The owner of the first card 100 can select one of the available benefits. The owner of the first card 100 can select a discount benefit for Lotte World among the benefits of card B (200). The owner of the first card 100 sends a card benefit use request to the card benefit providing server 300 by selecting card B and the discount benefit for Lotte World. If the owner of card B approves the card benefit use request, the owner of the first card 100 can use the discount benefit for Lotte World for card B in association with the first card 100. Accordingly, the owner of the first card 100 and his/her friend can purchase the free tickets at 50% discounts.

The card benefit providing method in accordance with an exemplary embodiment of the present invention described above may be implemented in the form of program instructions that may be executed through various computer components and recorded on a computer-readable recording medium. In this case, the computer-readable recording medium may include program instructions, data files, data structures, and the like, individually or in combination. On the other hand, the program instructions recorded on the recording medium may be specifically designed and configured for the present invention or may be well known to one of ordinary skill in the art of computer software.

Examples of the computer-readable recording medium include magnetic media such as a hard disk, a floppy disk, and a magnetic tape, optical media such as a compact disc-read only memory (CD-ROM) and a digital versatile disc (DVD), magneto-optical media such as a floptical disk, and hardware devices such as ROM, a random access memory (RAM), and a flash memory that are specially designed to store and execute program instructions. On the other hand, the recording medium may also be a transmission medium such as an optical fiber, a metal line, or a waveguide for transmitting a carrier signal that represents a program, a data structure, or the like.

In addition, the program instructions include not only machine language codes generated by a compiler or the like, but also high-level language codes executable by a computer using an interpreter or the like. The hardware devices described above may be constructed to operate as one or more software modules for performing the operations of the exemplary embodiments of the present invention, and vice versa.

Those skilled in the art will appreciate that the present invention can be implemented in other detailed forms without changing the technical scope or essential features of the invention.

Therefore, the embodiments should be understood to be exemplary rather than restrictive in all aspects. The scope of the present invention is defined by the accompanying claims rather than the detailed description. The meanings and scopes of the claims and all changes or modifications derived from equivalents thereof should be interpreted as being included in the scope of the present invention.

## Claims

1. A card benefit providing method comprising the steps of:
receiving, by a card benefit providing server, a request for use of a benefit linked to a second card from a terminal of an owner of a first card; and
performing, by the card benefit providing server, processing so that the benefit linked to the second card can be used in association with the first card when the owner of the second card has approved the benefit use request.

2. The card benefit providing method according to claim 1, further comprising the steps of:
transmitting, by the card benefit providing server, content for determining whether or not the owner of the second card approves the benefit use request to a terminal of the owner of the second card; and
receiving, by the card benefit providing server, a response indicating whether or not the owner of the second card approves the benefit use request from the terminal of the owner of the second card.

3. The card benefit providing method according to claim 1, wherein the benefit linked to the second card is processed to be used in association with the first card only when a specific condition required by the card benefit providing server is satisfied.

4. The card benefit providing method according to claim 1, wherein an valid period for the benefit linked to the second card is designated.

5. The card benefit providing method according to claim 1, further comprising the step of:
eliminating, by the card benefit server, the benefit from the second card when the benefit linked to the second card is processed to be used in association with the first card.

6. The card benefit providing method according to claim 1, further comprising the step of:
transmitting, by the card benefit providing server, the result of processing to at least one terminal of the owner of the first and second card when the benefit linked to the second card is processed to be used in association with the first card.

7. The card benefit providing method according to claim 1, further comprising the step of:
verifying, by the card benefit providing server, whether or not the first and second card have been connected under contract so that the owner of the first card can use the benefit linked to the second card.

8. A card benefit providing server comprising:
a database (DB) configured to store card information of first and second cards;
a receiver configured to receive a request for use of a benefit linked to the second card from a terminal of an owner of the first card;
a transmitter configured to transmit information to the terminal of the owner of the first card and a terminal of an owner of the second card; and
a controller configured to perform processing so that the benefit linked to the second card can be used in association with the first card when the owner of the second card has approved the benefit use request, and control the DB, the receiver, and the transmitter.

9. The card benefit providing server according to claim 8, wherein:
the transmitter transmits content for determining whether or not the owner of the second card approves the benefit use request to the terminal of the owner of the second card, and
the receiver receives a response indicating whether or not the owner of the second card approves the benefit use request from the terminal of the owner of the second card.

10. The card benefit providing server according to claim 8, wherein the benefit linked to the second card is processed to be used in association with the first card only when a specific condition required by the card benefit providing server is satisfied.

11. The card benefit providing server according to claim 8, wherein an valid period for the benefit linked to the second card is designated.

12. The card benefit providing server according to claim 8, wherein, when the benefit linked to the second card is processed to be used in association with the first card, the controller controls the benefit to be eliminated from the second card.

13. The card benefit providing server according to claim 8, wherein, when the benefit linked to the second card is processed to be used in association with the first card, the transmitter transmits the result of processing to at least one of the terminal of the owner of the first card and the terminal of the owner of the second card.

14. The card benefit providing server according to claim 8, wherein the controller verifies whether or not the first card and second card have been connected under contract so that the owner of the first card can use the benefit linked to the second card.
